# EUROPÄISCHE PATENTSCHRIFT

(11) **EP 2 795 694 B1**
(45) Veröffentlichungstag und Bekanntmachung des Hinweises auf die Patenterteilung: **14.12.2016**
(21) Anmeldenummer: 12784540.2
(22) Anmeldetag: 29.10.2012
(51) Int. Cl.: H01M 10/04, H01M 2/26, H01M 2/20, H01M 10/18

(54) **ELEKTRISCHES ENERGIESPEICHERMODUL UND VERFAHREN ZUM HERSTELLEN EINES ELEKTRISCHEN ENERGIESPEICHERMODULS**
ELECTRICAL ENERGY STORAGE MODULE AND METHOD FOR PRODUCING AN ELECTRICAL ENERGY STORAGE MODULE
MODULE DE STOCKAGE D'ÉNERGIE ÉLECTRIQUE ET PROCÉDÉ DE FABRICATION D'UN MODULE DE STOCKAGE D'ÉNERGIE ÉLECTRIQUE

(30) Priorität: 19.12.2011 DE 102011089087
(43) Veröffentlichungstag der Anmeldung: 29.10.2014
(73) Patentinhaber: Robert Bosch GmbH, 70442 Stuttgart (DE)
(72) Erfinder: KESSLER, Martin, 73527 Schwaebisch Gmuend (DE); DOEGE, Volker, 89561 Dischingen (DE); TIEFENBACH, Andy, 71665 Vaihingen-Horrheim (DE); SCHMIDT, Alexander, 78166 Donaueschingen (DE)
(86) Internationale Anmeldenummer: PCT/EP2012/071400
(87) Internationale Veröffentlichungsnummer: WO 2013/091960

(56) Entgegenhaltungen:
- EP-A1- 1 211 740
- WO-A1-2007/082863
- US-A- 3 390 014
- US-A1- 2011 159 336

## Beschreibung

Die Erfindung betrifft ein elektrisches Energiespeichermodul und ein Verfahren zum Herstellen eines elektrischen Energiespeichermoduls.

### Stand der Technik

Üblicherweise wird elektrischen Energiespeicherzellen Gleichstrom entnommen bzw. Gleichstrom in diese eingespeist. Daher ist der bisher bekannte Aufbau von Energiespeicherzellen auf die Optimierung der Ohm'schen Innenwiderstände und der spezifischen Energie- bzw. Leistungsdichte der Energiespeicherzellen ausgelegt.

In vielen Anwendungen elektrischer Energiespeicherzellen werden Speicherzellen in serieller oder paralleler Anordnung miteinander zu Batteriemodulen verschaltet, um gewünschte Ausgangsparameter wie Gesamtspannung, Spannungsbereich, Energieinhalt oder Leistungsdichte einzustellen. Werden aus derartigen Energiespeicherzellen Ströme mit steigendem Wechselanteil entnommen, steigt frequenzabhängig der Einfluss der verteilten Induktivität der Energiespeicherzellen. Die induktiven Verluste einer Energiespeicherzelle setzen sich aus den individuellen Anteilen der Verlustbeiträge der Elektroden, der Polverschaltung und der Anordnung der Elektroden im Gehäuse zusammen. Außerdem können bei Betriebsfrequenzen im kHz-Bereich durch den Skineffekt Verluste in den Strom tragenden Bereichen sowie Wirbelströme in elektrisch leitfähigen Flächen, beispielsweise im Gehäuse, auftreten.

Die Druckschrift DE 10 2010 035 114 A1 offenbart beispielsweise eine Batterieeinheit mit einer Vielzahl von Zelleneinheiten, welche jeweils Akkumulatorzellen aufweisen, die über Busschienen elektrisch gekoppelt sind.

Die Druckschrift US 3 390 014 A offenbart eine Sekundärbatterie mit einer Mehrzahl an Batteriezellen, welche mittels Bipolarplatten elektrisch seriell oder parallel verschaltet werden können.

Die Druckschrift EP 1 211 740 A1 offenbart ein Batteriemodul mit einer Mehrzahl an Batteriezellen, die elektrisch mittels Stromsammeln elektrisch miteinander verschaltet sind.

Es besteht ein Bedarf an Energiespeichermodulen aus einer oder mehreren Energiespeicherzellen, welche hinsichtlich der Entnahme von Wechselströmen hoher Frequenz geringere Verluste aufweisen und somit den Wirkungsgrad des die Energiespeicherzellen einsetzenden Systems verbessern.

### Offenbarung der Erfindung

Die vorliegende Erfindung schafft ein elektrisches Energiespeichermodul, mit mindestens einem Speicherzellstapel, welcher eine Vielzahl von Gruppen erster, flächig paralleler Energiespeicherzellen, welche jeweils erste Elektrodenelemente aufweisen, und eine Vielzahl von flächig parallel zu den Gruppen erster Energiespeicherzellen angeordneten Gruppen zweiter, flächig paralleler Energiespeicherzellen aufweist, welche jeweils zweite Elektrodenelemente aufweisen. Dabei sind die Gruppen erster und zweiter Energiespeicherzellen alternierend entlang einer ersten Erstreckungsrichtung des Speicherzellstapels angeordnet und die ersten Elektrodenelemente weisen an einer Seitenfläche des Speicherzellstapels eine unterschiedliche Polarität zu den zweiten Elektrodenelementen an der Seitenfläche des Speicherzellstapels auf. Das Energiespeichermodul umfasst weiterhin eine Vielzahl flächiger Kontaktelemente, welche an den Seitenflächen des Speicherzellstapels angeordnet sind, welche benachbarte Gruppen erster und zweiter Energiespeicherzellen galvanisch verbinden, und welche alle ersten oder zweiten Elektrodenelemente der benachbarten Gruppen erster und zweiter Energiespeicherzellen jeweils über die Breite des Speicherzellstapels hinweg kontaktieren.

Weiterhin weist das Energiespeichermodul einen ersten flächigen Polanschluss, welcher erste Elektrodenelemente einer an einer ersten Endfläche des Speicherzellstapels angeordneten Gruppe erster Energiespeicherzellen elektrisch kontaktiert, und einen zweiten flächigen Polanschluss, welcher zweite Elektrodenelemente einer an einer zweiten Endfläche des Speicherzellstapels angeordneten Gruppe zweiter Energiespeicherzellen elektrisch kontaktiert, auf.

Erfindungsgemäß sind der erste flächige Polanschluss und der zweite flächige Polanschluss benachbart zueinander und zumindest teilweise parallel zueinander entlang derselben Seitenfläche des Speicherzellstapels geführt.

Weiterhin schafft die vorliegende Erfindung ein Verfahren zum Herstellen eines elektrischen Energiespeichermoduls, mit den Schritten des alterniereden Anordnens einer Vielzahl von Gruppen erster, flächig paralleler Energiespeicherzellen, welche jeweils erste Elektrodenelemente aufweisen, und einer Vielzahl von flächig parallel zu den Gruppen erster Energiespeicherzellen angeordneten Gruppen zweiter, flächig paralleler Energiespeicherzellen, welche jeweils zweite Elektrodenelemente aufweisen, in mindestens einem Speicherzellstapel entlang einer ersten Erstreckungsrichtung des Speicherzellstapels, wobei die ersten Elektrodenelemente an einer Seitenfläche des Speicherzellstapels eine unterschiedliche Polarität zu den zweiten Elektrodenelementen an der Seitenfläche des Speicherzellstapels aufweisen, und des Kontaktierens im Wesentlichen aller ersten oder zweiten Elektrodenelemente der benachbarten Gruppen erster und zweiter Energiespeicherzellen jeweils über die Breite des Speicherzellstapels hinweg mithilfe einer Vielzahl flächiger Kontaktelemente, welche an den Seitenflächen des Speicherzellstapels angeordnet sind, und welche benachbarte Gruppen erster und zweiter Energiespeicherzellen galvanisch verbinden.

Weiterhin umfasst das Verfahren die Schritte des Anordnens eines ersten flächigen Polanschlusses, welcher erste Elektrodenelemente einer an einer ersten Endfläche des Speicherzellstapels angeordneten Gruppe erster Energiespeicherzellen elektrisch kontaktiert; und des Anordnens eines zweiten flächigen Polanschlusses, welcher zweite Elektrodenelemente einer an einer zweiten Endfläche des Speicherzellstapels angeordneten Gruppe zweiter Energiespeicherzellen elektrisch kontaktiert. Erfindungsgemäß werden der erste flächige Polanschluss und der zweite flächige Polanschluss benachbart zueinander und zumindest teilweise parallel zueinander entlang derselben Seitenfläche des Speicherzellstapels geführt.

### Vorteile der Erfindung

Es ist eine Idee der vorliegenden Erfindung, die Verluste, die durch bei der Ansteuerung eines elektrischen Energiespeichermoduls auftretenden Wirbelströme im Inneren des Energiespeichermoduls und/oder in dessen Gehäuse verursacht werden, mithilfe eines geeigneten internen Aufbaus des Energiespeichermoduls mit möglichst geringer interner Zellinduktivität zu reduzieren. Dazu werden die Energiespeicherzellen des elektrischen Energiespeichermoduls in geeigneter Weise derart angeordnet, dass einerseits die Gesamtlänge der notwendigen stromführenden Leiterelemente und andererseits die Anzahl der Kontaktübergänge zwischen den einzelnen verschalteten Energiespeicherzellen und Gehäuseteilen minimiert wird.

Ein erheblicher Vorteil besteht darin, dass die Verlustenergie insbesondere bei der Entnahme von Wechselstrom hoher Frequenz aus dem Energiespeichermodul erheblich reduziert werden kann. Insbesondere bei Batteriesystemen mit integriertem Umrichter, sogenannten Batteriedirektumrichtern ("battery direct inverter", BDI), bei denen ein schneller Wechsel der Stromführung durch ein Batteriemodul zur Variation der Stromspannung erfolgt, ist diese Reduzierung der Verlustenergie von großem Vorteil.

Ein weiterer Vorteil besteht darin, dass die Kurzzeitdynamik derartiger Energiespeichermodule verbessert wird, indem die Verzögerung der Energie- bzw. Lastabgabe der Energiespeicherzellen nach Lastwechseln minimiert wird. Dadurch kann in vorteilhafter Weise auf ansonsten möglicherweise ausgleichende Bauelemente wie beispielsweise Pufferkondensatoren verzichtet werden, was den Bauraumbedarf sowie die Fertigungskosten von Energiespeicherzellen bzw. -module einsetzenden Bauteilen senken kann.

Überdies kann durch die Vermeidung von induktiven Verlustanteilen durch die Energiespeicherzellen die elektromagnetische Verträglichkeit (EMV) verbessert werden, da die emittierten elektromagnetischen Felder vermindert und Störeinflüsse auf benachbarte Elektronikbauteile verringert werden können. Ferner werden Ohm'sche Verluste, beispielsweise aufgrund des Skineffekts, weitestgehend reduziert, was vorteilhafter Weise mit erhöhtem Wirkungsgrad und geringerer Wärmeentwicklung einhergeht.

Erfindungsgemäß kann das Energiespeichermodul auch zwei an den Seitenflächen aneinander angrenzende Speicherzellstapel, jeweils mit Gruppen erster, flächig paralleler Energiespeicherzellen und Gruppen zweiter, flächig paralleler Energiespeicherzellen aufweisen.
Dabei kann das erfindungsgemäße Energiespeichermodul weiterhin einen ersten flächigen Polanschluss, welcher erste Elektrodenelemente einer an einer Endfläche eines ersten Speicherzellstapels angeordneten Gruppe erster Energiespeicherzellen elektrisch kontaktiert, und einen zweiten flächigen Polanschluss, welcher erste Elektrodenelemente einer an einer Endfläche eines zweiten Speicherzellstapels angeordneten Gruppe erster Energiespeicherzellen elektrisch kontaktiert, aufweisen, wobei der erste flächige Polanschluss und der zweite flächige Polanschluss parallel zueinander zwischen den zwei Speicherzellstapeln angeordnet sind.

Weiterhin schafft die vorliegende Erfindung auch ein Verfahren zum Herstellen eines elektrischen Energiespeichermoduls mit zwei an Seitenflächen aneinander angrenzenden Speicherzellstapeln, mit den Schritten des alterniereden Anordnens einer Vielzahl von Gruppen erster, flächig paralleler Energiespeicherzellen, welche jeweils erste Elektrodenelemente aufweisen, und einer Vielzahl von flächig parallel zu den Gruppen erster Energiespeicherzellen angeordneten Gruppen zweiter, flächig paralleler Energiespeicherzellen, welche jeweils zweite Elektrodenelemente aufweisen, in zwei Speicherzellstapeln entlang einer ersten Erstreckungsrichtung des Speicherzellstapels, wobei die ersten Elektrodenelemente an einer Seitenfläche des Speicherzellstapels eine unterschiedliche Polarität zu den zweiten Elektrodenelementen an der Seitenfläche des Speicherzellstapels aufweisen, und des Kontaktierens im Wesentlichen aller ersten oder zweiten Elektrodenelemente der benachbarten Gruppen erster und zweiter Energiespeicherzellen jeweils über die Breite des Speicherzellstapels hinweg mithilfe einer Vielzahl flächiger Kontaktelemente, welche an den Seitenflächen des Speicherzellstapels angeordnet sind, und welche benachbarte Gruppen erster und zweiter Energiespeicherzellen galvanisch verbinden.
Wetierhin umfasst das Verfahren die Schritte des Anordnens eines ersten flächigen Polanschlusses, welcher erste Elektrodenelemente einer an einer Endfläche des ersten Speicherzellstapels angeordneten Gruppe erster Energiespeicherzellen elektrisch kontaktiert; und des Anordnens eines zweiten flächigen Polanschlusses, welcher zweite Elektrodenelemente einer an einer Endfläche des zweiten Speicherzellstapels angeordneten Gruppe zweiter Energiespeicherzellen elektrisch kontaktiert. Erfindungsgemäß werden der erste flächige Polanschluss und der zweite flächige Polanschluss parallel zueinander zwischen den zwei Speicherzellstapeln angeordnet.

Gemäß einer weiteren Ausführungsform kann das erfindungsgemäße Energiespeichermodul weiterhin eine Isolationsschicht aufweisen, welche zwischen dem ersten flächigen Polanschluss und dem zweiten flächigen Polanschluss zum galvanischen Isolieren der Polanschlüsse angeordnet ist.

Gemäß einer weiteren Ausführungsform kann das erfindungsgemäße Energiespeichermodul weiterhin ein Gehäuse aufweisen, welches die Gruppen erster, flächig paralleler Energiespeicherzellen, die Gruppen zweiter, flächig paralleler Energiespeicherzellen und die Vielzahl von Kontaktelementen einschließt.

Dabei kann in einer Ausführungsform das Gehäuse aus einem nicht oder nur geringfügig elektrisch leitfähigen Material bestehen.

Gemäß einer weiteren Ausführungsform des erfindungsgemäßen Energiespeichermoduls können die ersten und zweiten Elektrodenelemente spiralförmig ineinander gewickelt sind.

Gemäß einer weiteren Ausführungsform des erfindungsgemäßen Energiespeichermoduls können die ersten und zweiten Elektrodenelemente als Elektrodenstapel aus einzelnen Lagen oder als Faltstapel ausgebildet sein.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer Anordnung elektrischer Energiespeicherzellen;
- Fig. 2: eine schematische Darstellung eines elektrischen Energiespeichermoduls gemäß einer Ausführungsform der Erfindung;
- Fig. 3: eine schematische Darstellung eines elektrischen Energiespeichermoduls gemäß einer weiteren Ausführungsform der Erfindung; und
- Fig. 4: eine schematische Darstellung eines Verfahrens zum Herstellen eines elektrischen Energiespeichermoduls gemäß einer weiteren Ausführungsform der Erfindung.

Die im Folgenden verwendete Richtungsterminologie, das heißt, Begriffe wie "links", "rechts", "oben", "unten", "vorne", "hinten", "darüber", "dahinter" und dergleichen, wird lediglich zum besseren Verständnis der Zeichnungen verwendet, und soll in keinem Fall eine Beschränkung der Allgemeinheit darstellen. Gleiche Bezugszeichen bezeichnen im Allgemeinen gleichartige oder gleich wirkende Komponenten.

Elektrische Energiespeicherzellen im Sinne der vorliegenden Erfindung umfassen alle Einrichtungen, welche über einen vordefinierten Zeitraum elektrische Energie speichern und über einen weiteren Zeitraum wieder abgeben können. Energiespeicherzellen im Sinne der vorliegenden Erfindung umfassen dabei alle Arten von sekundären und primären Energiespeichern, insbesondere elektrisch kapazitive, elektrochemische (faradaysche) sowie kombiniert arbeitende Speichertypen. Die betrachteten Zeiträume können dabei von Sekunden bis hin zu Stunden, Tagen oder Jahren umfassen. Elektrische Energiespeicherzellen können beispielsweise Lithium-Ionen-Zellen, Lithium-Polymer-Zellen, Nickel-Metallhydrid-Zellen, Ultrakondensatoren, Superkondensatoren, Powerkondensatoren, BatCaps, Akkumulatoren auf der Basis von Blei, Zink, Natrium, Lithium, Magnesium, Schwefel oder anderen Metallen, Elementen oder Legierungen, oder ähnliche Systeme umfassen. Die Funktionalität der von der Erfindung umfassten elektrischen Energiespeicherzellen kann dabei auf Interkalationselektroden, Reaktionselektroden oder Legierungselektroden in Kombination mit wässrigen, aprotischen oder polymeren Elektrolyten beruhen.

Der Aufbau von elektrischen Energiespeicherzellen im Sinne der vorliegenden Erfindung kann dabei sowohl unterschiedliche äußere Aufbauformen, wie beispielsweise prismatische Formen oder sogenannte "Pouch"-Formen, als auch unterschiedliche Elektrodenaufbauten, wie beispielsweise gewickelte, gestapelte, gefaltete oder sonstige Aufbauten, umfassen.

Elektrodenelemente im Sinne der vorliegenden Erfindung können aus verschiedenen elektrisch leitfähigen, beispielsweise metallischen Materialien hergestellt sein. Elektrodenelemente im Sinne der vorliegenden Erfindung können beschichtet, dreidimensional befüllt oder/und mit großer aktiver Oberfläche hergestellt sein. Dabei können die flächigen Elektrodenelemente je nach Speichertechnologie unterschiedliche Abmessungen aufweisen, beispielsweise kann die Dicke von Elektrodenelementen Größenordnungen von wenigen µm bis etliche mm aufweisen. Die Elektrodenelemente können gefaltet, gestapelt oder gewickelt sein, und es kann vorgesehen sein, zwischen den Elektrodenelementen Isolations- oder Separationsschichten auszubilden, welche die Elektrodenelemente galvanisch voneinander trennen und innerhalb des Zellgehäuses den Elektrolyt in einzelne Bereiche abtrennen können. Es kann auch möglich sein, die Elektrodenelemente in bipolarer Form aufzubauen. Die flächige Form der Elektrodenelemente kann quadratisch, rechteckig, rund, elliptisch oder beliebig anders gestaltet sein.

Elektrische Energiespeichermodule im Sinne der vorliegenden Erfindung umfassen Komponenten, welche eine oder mehrere elektrische Energiespeicherzellen in einem Gehäuse aufweisen, wobei die elektrischen Energiespeicherzellen in geeigneter Weise elektrisch untereinander gekoppelt sind, um eine serielle oder parallele Verschaltung der Energiespeicherzellen zu gewährleisten. Elektrische Energiespeichermodule können dabei Modulanschlüsse aufweisen, an welchen eine von der internen Verschaltung der elektrischen Energiespeicherzellen des elektrischen Energiespeichermoduls abhängige Ausgangsspannung abgreifbar ist.

Gehäuse im Sinne der vorliegenden Erfindung umfassen alle Bauteile, welche eine Ausnehmung zur Aufnahme einer oder mehrerer elektrischer Energiespeicherzellen sowie der elektrisch leitfähigen Verschaltungselemente der elektrischen Energiespeicherzellen aufweisen, und welche die aufgenommenen Energiespeicherzellen und Elemente mechanisch und/oder elektrisch gegenüber der Außenwelt abschirmen können. Gehäuse können dabei elektrisch leitfähige Materialien, elektrisch nicht oder nur schlecht leitfähige Materialien oder Kombinationen aus Teilbereichen derartiger Materialien aufweisen, wie beispielsweise Kunststoffe, Metalle, Legierungen aus Metallen. Die Form und Größe der Gehäuse kann dabei an die aufgenommenen Energiespeicherzellen und Elemente angepasst sein.

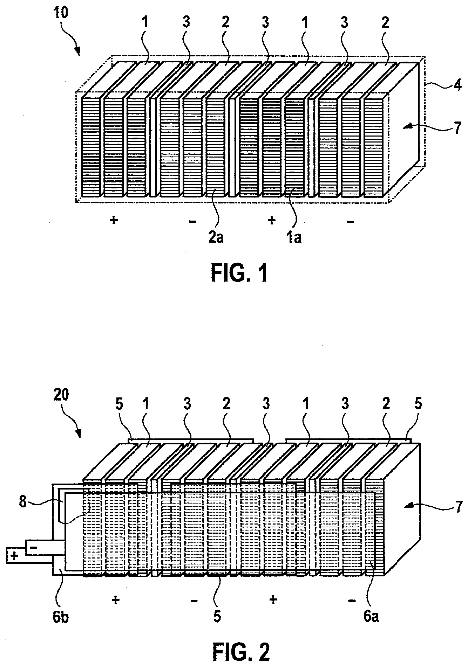

Fig. 1 zeigt eine schematische Darstellung einer Anordnung elektrischer Energiespeicherzellen 10. Die Anordnung 10 umfasst eine Vielzahl von flächigen elektrischen Energiespeicherzellen 1 und 2, welche entlang ihrer Flächennormalenrichtung Seite an Seite in einem Speicherzellstapel 7 angeordnet sind. Der Speicherzellstapel 7 weist dabei eine erste Erstreckungsrichtung auf, welche in Fig. 1 beispielhaft von links nach rechts verläuft. Der Speicherzellstapel 7 kann jeweils viereckige Endflächen aufweisen, welche über vier Seitenflächen entlang der erste Erstreckungsrichtung verbunden sind. In der beispielhaften Ausführungsform der Fig. 1 hat der Speicherzellstapel 7 rechteckige Endflächen, wobei jedoch andere Endflächenformen, wie beispielsweise eine quadratische oder eine trapezoide Form ebenso möglich sind.

Die Energiespeicherzellen 1 und 2 weisen eine Vielzahl von Elektrodenelementen 1a bzw. 2a auf. Die Elektrodenelemente 1a bzw. 2a können beispielsweise spiralförmig ineinander gewickelte Elektroden, gestapelte Elektroden oder aufeinander gefaltete Elektroden aufweisen. Dabei können pro Energiespeicherzelle 1 bzw. 2 Elektrodenelemente verschiedener Polarität vorhanden sein, welche innerhalb der Energiespeicherzelle 1 bzw. 2 galvanisch voneinander getrennt sind. Die Elektrodenelemente können beispielsweise flache Schichten aus elektrisch leitfähigem Material sein, welche in einer kammartigen Struktur flächig ineinander verzahnt sind. Es kann auch möglich sein, dass die Elektrodenelemente durch Wickeln oder Falten eines Bandes aus geschichteten Elektrodenelementen in eine alternierende Stapelform gebracht worden sind. Es sollte dabei klar sein, dass eine Fülle an Möglichkeiten gibt, die Elektrodenelemente 1a bzw. 2a in einer Energiespeicherzelle 1 bzw. 2 anzuordnen, und dass die Auswahl einer Anordnung von der verwendeten Speichertechnologie, den Randbedingungen hinsichtlich der äußeren Form der Energiespeicherzelle 1 bzw. 2 und/oder den zu erreichenden elektrischen Charakteristika der Energiespeicherzelle 1 bzw. 2 abhängig sein kann. Beispielsweise kann es vorteilhaft sein, die Elektrodenelemente 1a bzw. 2a derart anzuordnen, dass das innere Volumen der Energiespeicherzellen 1 bzw. 2 maximal ausgenutzt wird.

Die Energiespeicherzellen 1 unterscheiden sich von den Energiespeicherzellen 2 dahingehend, dass sie im Speicherzellstapel 7 hinsichtlich ihrer Polarität spiegelbildlich angeordnet sind. Mit anderen Worten, die Energiespeicherzellen 1 sind derart angeordnet, dass sie auf der vorderen Seitenfläche des Speicherzellstapels 7 Elektrodenelemente 1a positiver Polarität, und auf der hinteren Seitenfläche des Speicherzellstapels 7 Elektrodenelemente 1a negativer Polarität aufweisen. Im Gegensatz dazu sind die Energiespeicherzellen 2 derart angeordnet, dass sie auf der vorderen Seitenfläche des Speicherzellstapels 7 Elektrodenelemente 2a negativer Polarität, und auf der hinteren Seitenfläche des Speicherzellstapels 7 Elektrodenelemente 2a positiver Polarität aufweisen. Die Energiespeicherzellen 1 und 2 können dabei untereinander beispielsweise jeweils durch Trennelemente 3 elektrisch isoliert sein. Die Trennelemente 3 dienen insbesondere der Abtrennung des Elektrolyts in Segmente, damit eine bestimmte elektrische Potentialdifferenz innerhalb dieses Segements im Elektrolyt nicht überschritten wird. Diese können dabei beispielsweise dünne Schichten elektrisch nicht oder nur gering leitfähiger Materialien aufweisen. Die Anzahl der jeweils nebeneinander angeordneten, in gleicher Richtung orientierten Energiespeicherzellen1 bzw. 2 ist in Fig. 1 beispielhaft mit drei dargestellt, wobei jedoch jede andere Anzahl von nebeneinander angeordneten Energiespeicherzellen gleicher Ausrichtung ebenfalls möglich ist. Die Anordnung von Zellen in gleicher Richtung bedeutet elektrisch eine Parallelschaltung der Zellen, was insbesondere die Darstellung höherer Ströme ermöglicht. Die Verschaltung eines solchen Pakets mit einem aus Zellen in entgegengesetzter Richtung entspricht einer Serienschaltung mit einer entsprechenden Addition der Einzelspannungen.

Der Speicherzellstapel 7 kann von einem Gehäuse 4 umschlossen sein, welches in Fig. 1 beispielhaft prismatisch ist. Es ist jedoch klar, dass jede andere Form für das Gehäuse 4 ebenfalls möglich ist, und dass diese Form beispielsweise von den Abmessungen der eingeschlossenen Energiespeicherzellen 1 bzw. 2 abhängig sein kann.

Fig. 2 zeigt eine schematische Darstellung eines elektrischen Energiespeichermoduls 20, welches eine Anordnung elektrischer Energiespeicherzellen aufweist. Die Anordnung elektrischer Energiespeicherzellen kann dabei beispielsweise der Anordnung 10 in Fig. 1 entsprechen. Es sollte dabei jedoch klar sein, dass jede andere Anordnung unter Anpassung der jeweils verschalteten Elemente für das elektrische Energiespeichermodul 20 ebenfalls möglich ist.

Das elektrische Energiespeichermodul 20 weist flächige Kontaktelemente 5 auf, welche jeweils benachbarte Gruppen von Energiespeicherzellen 1 bzw. 2 seitlich kontaktieren und untereinander verbinden. Dabei verbinden die flächigen Kontaktelemente 5 jeweils Elektrodenelemente 1a und 2a unterschiedlicher Polarität. Die flächigen Kontaktelemente 5 können jeweils eine Flächenerstreckungsrichtung aufweisen, welche senkrecht zu den Flächenerstreckungsrichtungen der Elektrodenelemente 1a bzw. 2a sowie den Seitenflächen der Energiespeicherzellen 1 bzw. 2 steht. Die flächigen Kontaktelemente 5 können beispielsweise Schichten, flache Bänder oder Schichtelemente aus elektrisch leitfähigem Material aufweisen. Die flächigen Kontaktelemente 5 kontaktieren dabei im Wesentlichen alle ersten oder zweiten Elektrodenelemente 1a bzw. 2a der benachbarten Gruppen von Energiespeicherzellen 1 bzw. 2 jeweils entlang ihrer Flächenerstreckungsrichtung über die Breite des Speicherzellstapels 7 hinweg. Vorzugsweise kontaktieren die flächigen Kontaktelemente 5 eine Vielzahl von Elektrodenelementen 1a bzw. 2a pro Energiespeicherzelle 1 bzw. 2, so dass der elektrische Verbindungspfad zwischen benachbarten Energiespeicherzellen 1 bzw. 2 möglichst gering ist. Zugleich ist die Stromdichte über die große flächige Ausdehnung der jeweiligen Kontaktelemente 5 maximal homogen verteilt.

Die flächige Kontaktierung der Kontaktelemente 5 kann beispielsweise über Schweiß-, Spritz-, Sputter- oder Klebeverfahren mit den Elektrodenelementen 1a bzw. 2a erreicht werden. Dabei kann es vorgesehen sein, den Überstand der Kontaktelemente 5 über die vertikale Erstreckung der jeweiligen Schichten von Elektrodenelementen 1a bzw. 2a hinaus so gering wie möglich zu halten, um überflüssige Strompfade zu vermeiden.

Die Kontaktelemente 5 sind an Vorderseite und Rückseite des Speicherzellstapels 7 alternierend angeordnet, so dass sich ein mäanderförmiger bzw. schlangenlinienförmiger Strompfad zwischen benachbarten Energiespeicherzellen 1 bzw. 2 entlang der Längserstreckung des Speicherzellstapels 7 ergibt. Die Anzahl der Gruppen benachbarter, gleichartig angeordneter Energiespeicherzellen 1 bzw. 2 ist vorzugsweise geradzahlig, so dass die jeweils nicht über Kontaktelemente 5 verschalteten Endkontakte der jeweils endseitig des Speicherzellstapels 7 gelegenen Gruppen benachbarter, gleichartig angeordneter Energiespeicherzellen 1 bzw. 2 auf der gleichen Seite des Speicherzellstapels 7 liegen. Im beispielhaft illustrierten Fall in der Fig. 2 sind diese Endkontakte auf der Vorderseite am linken und rechten Ende des Speicherzellstapels gelegen. Die Endkontakte können jeweils über Polanschlüsse bzw. Polkontaktanschlüsse 6a und 6b elektrisch kontaktiert werden.

Die Polanschlüsse bzw. Polkontaktanschlüsse 6a und 6b können dabei jeweils flächige Elemente aufweisen, welche flächig parallel zueinander zu einer Endseite des Speicherzellstapels 7 geführt werden. Im vorliegenden Beispiel der Fig. 2 sind die Polkontaktanschlüsse 6a und 6b auf die linke Seite des Speicherzellstapels 7 geführt. Der Abstand der Polkontaktanschlüsse 6a und 6b zueinander kann dabei so gering wie möglich gewählt werden, um die durch die Polkontaktanschlüsse 6a und 6b eingeschlossene Durchflutungsfläche und damit die induktive Impedanz der Polkontaktanschlüsse 6a und 6b so gering wie möglich zu halten.

Es kann dabei optional vorgesehen sein, eine Isolationsschicht 8, welche in Fig. 2 abschnittsweise angedeutet ist, zwischen die Polkontaktanschlüsse 6a und 6b einzubringen, um eine galvanische Trennung zwischen den Polkontaktanschlüssen 6a und 6b zu gewährleisten. Die Isolationsschicht 8 kann sich für eine entsprechende galvanische Isolierung auch zwischen den vorderseitigen Kontaktelementen 5 und dem Polkontaktanschluss 6a erstrecken.

Die Polanschlüsse bzw. Polkontaktanschlüsse 6a und 6b können beispielsweise über eine möglichst große Fläche flächenbündig zueinander verlaufen. Zwischen den jeweiligen Enden der Polkontaktanschlüsse 6a und 6b kann dann eine Ausgangsspannung des Energiespeichermoduls 10 abgegriffen werden. Das Energiespeichermodul 10 in Fig. 2 kann ebenfalls über ein Gehäuse 4 verfügen, welches aus Gründen der Übersichtlichkeit in Fig. 2 nicht explizit dargestellt ist.

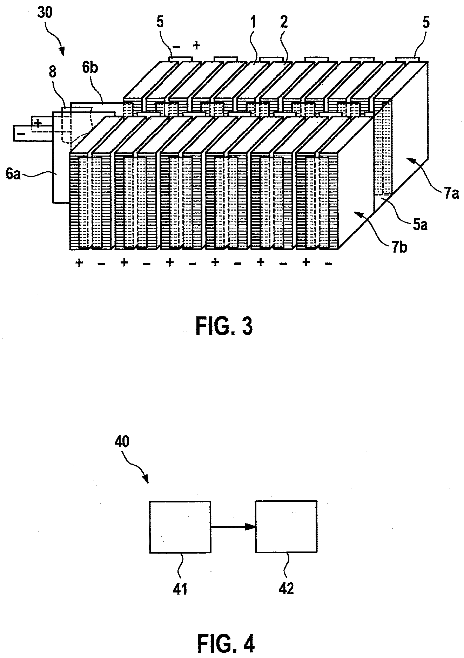

Fig. 3 zeigt eine schematische Darstellung eines elektrischen Energiespeichermoduls 30, welches eine Anordnung elektrischer Energiespeicherzellen aufweist. Die Energiespeicherzellen können dabei den Energiespeicherzellen 1 bzw. in Fig. 1 entsprechen. Das elektrische Energiespeichermodul 30 weist eine Anordnung zweier parallel zueinander angeordneter Speicherzellstapel 7a und 7b auf. Ohne Beschränkung der Allgemeinheit soll im Folgenden der im Hintergrund dargestellte Speicherzellstapel 7a als hinterer Speicherzellstapel, und der im Vordergrund dargestellte Speicherzellstapel 7b als vorderer Speicherzellstapel bezeichnet werden. Die Anzahl der Gruppen benachbarter, gleichartig angeordneter Energiespeicherzellen 1 bzw. 2 in beiden Speicherzellstapeln 7a und 7b kann gleich sein und eine geradzahlige Anzahl aufweisen. Die Anzahl der Energiespeicherzellen 1 bzw. 2 pro Gruppe ist in Fig. 3 beispielhaft mit eins dargestellt, wobei jede andere Anzahl ebenso möglich ist. Das elektrische Energiespeichermodul 30 weist zwischen den Energiespeicherzellen 1 bzw. 2 keine Trennelemente auf; es versteht sich jedoch, dass ebenso wie in Fig. 1 dargestellt entsprechende Trennelemente 3 zwischen den Gruppen benachbarter, gleichartig angeordneter Energiespeicherzellen 1 bzw. 2 vorgesehen sein können.

Ähnlich wie in dem in Fig. 2 dargestellten Energiespeichermodul 20 sind benachbarte Energiespeicherzellen 1 bzw. 2 jedes Speicherzellstapels 7a bzw. 7b über Kontaktelemente 5 miteinander verbunden, wobei die vorderseitigen Kontaktelemente 5 zu den hinterseitigen Kontaktelementen 5 jeweils alternierend angeordnet sind, so dass sich ein mäanderförmiger bzw. schlangenlinienförmiger Strompfad zwischen benachbarten Energiespeicherzellen 1 bzw. 2 entlang der Längserstreckung der Speicherzellstapel 7a und 7b ergibt. Die jeweils rechts gelegenen letzten Energiespeicherzellen 2 beider Speicherzellstapel 7a und 7b können über ein stapelübergreifendes Kontaktelement 5a elektrisch verbunden sein, so dass sich ein stapelübergreifender Strompfad ergibt, welcher mäanderförmig von der linken Seite des hinteren Speicherzellstapels 7a zur rechten Seite des hinteren Speicherzellstapels 7a, und von der rechten Seite des vorderen Speicherzellstapels 7b zur linken Seite des vorderen Speicherzellstapels 7b zurück verläuft. Dabei können an den jeweiligen Endkontakten der Speicherzellstapel 7a und 7b, das heißt, an der Hinterseite der am weitesten links gelegenen Energiespeicherzelle 1 des vorderen Speicherzellstapels 7b sowie an der Vorderseite der am weitesten links gelegenen Energiespeicherzelle 1 des hinteren Speicherzellstapels 7a jeweils Polanschlüsse bzw. Polkontaktanschlüsse 6a und 6b vorgesehen sein.

Die Polanschlüsse bzw. Polkontaktanschlüsse 6a und 6b können dabei analoge Eigenschaften wie im Zusammenhang mit Fig. 2 beschrieben aufweisen. Insbesondere kann eine optionale Isolationsschicht 8 vorgesehen sein, die zwischen die Polkontaktanschlüsse 6a und 6b eingebracht ist, um eine galvanische Trennung zwischen den Polkontaktanschlüssen 6a und 6b zu gewährleisten. Die Isolationsschicht 8 kann sich für eine entsprechende galvanische Isolierung auch zwischen den vorderseitigen Kontaktelementen 5 des hinteren Speicherzellstapels 7a und den hinterseitigen Kontaktelementen 5 des vorderen Speicherzellstapels 7b erstrecken.

In Fig. 3 ist aus Gründen der Übersichtlichkeit wiederum kein Gehäuse dargestellt, obgleich das Energiespeichermodul 20 über ein Gehäuse 4 verfügen kann, welches eine mechanische und/oder elektrische Abschirmung des Energiespeichermoduls 20 gegenüber der Außenwelt gewährleisten kann.

Insgesamt zeigen die Fig. 2 und 3 lediglich beispielhafte Ausgestaltungsformen von Energiespeichermodulen. Variationen und Modifikationen können dabei unter Berücksichtigung von zweckbehafteten Konstruktionskriterien ausgestaltet werden. Generell ist es vorteilhaft, die Abstände zwischen stromführenden Elementen beider Polaritäten möglichst gering zu halten, um die durch diese Elemente umschlossene aktive Durchflutungsfläche zu minimieren. Dies bedeutet, dass die induktive Impedanz der stromführenden Elemente im Inneren der Energiespeichermodule minimiert werden kann. Außerdem ist es vorteilhaft, die stromführenden Elemente möglichst großflächig auszugestalten, um die Stromdichte möglichst homogen zu verteilen. Ist eine ideal flächige, eng an den aktiven Bereichen der Elektrodenelemente anliegende Polkontaktierung nur unter bestimmte Randbedingungen möglich, wie beispielsweise Sicherheitsanforderungen oder technischen Zwängen, so kann ist zumindest darauf zu achten, die Zusammenführung der stromführenden Elemente unterschiedlicher Polarität in geringem Abstand zueinander zu gewährleisten. Weiterhin ist es vorteilhaft, die Anzahl der notwendigen Polanschlüsse der Energiespeicherzellen mit dem Gehäuse durch geeignete modulinterne Verschaltung der Energiespeicherzellen zu minimieren. Dadurch reduzieren sich die Ohm'schen Leitungswiderstände, was wiederum sowohl im Gleichstrombetrieb als auch im Wechselstrombetrieb in einer Minimierung der Ohm'schen Verluste, insbesondere aufgrund des Skineffekts, resultiert.

Die dargestellten Energiespeichermodule können beispielsweise bevorzugt in Systemen eingesetzt werden, in denen Wechselströme hoher Frequenz aus den Energiespeicherzellen entnommen werden, beispielsweise in Batteriedirektumrichtern mit Ansteuerfrequenzen oberhalb von etwa 100 Hz. In diesen Systemen können aufgrund der Bauweise der Energiespeichermodule induktive Verluste aufgrund der hohen Wechselstromfrequenz minimiert werden. Gleichzeitig verbessert sich das Ansprechverhalten der Energiespeichermodule im Kurzzeitbereich, was die Dynamik und Zuverlässigkeit der Systeme erheblich verbessert.

Fig. 4 zeigt eine schematische Darstellung eines Verfahrens 40 zum Herstellen eines elektrischen Energiespeichermoduls, insbesondere eines der in den Fig. 2 und 3 schematisch gezeigten Energiespeichermodule 20 oder 30. In einem ersten Schritt 41 erfolgt ein alternieredes Anordnen einer Vielzahl von Gruppen erster, flächig paralleler Energiespeicherzellen 1, welche jeweils erste Elektrodenelemente 1a aufweisen, und einer Vielzahl von flächig parallel zu den Gruppen erster Energiespeicherzellen 1 angeordneten Gruppen zweiter, flächig paralleler Energiespeicherzellen 2, welche jeweils zweite Elektrodenelemente 2a aufweisen, in mindestens einem Speicherzellstapel 7, 7a, 7b entlang einer ersten Erstreckungsrichtung des Speicherzellstapels 7, 7a, 7b, wobei die ersten Elektrodenelemente 1a an einer Seitenfläche des Speicherzellstapels 7, 7a, 7b eine unterschiedliche Polarität zu den zweiten Elektrodenelementen 2a an der Seitenfläche des Speicherzellstapels 7, 7a, 7b aufweisen. In einem zweiten Schritt 42 erfolgt ein Kontaktieren im Wesentlichen aller ersten oder zweiten Elektrodenelemente 1a, 2a der benachbarten Gruppen erster und zweiter Energiespeicherzellen 1, 2 jeweils über die Breite des Speicherzellstapels 7, 7a, 7b, hinweg mithilfe einer Vielzahl flächiger Kontaktelemente 5, welche an den Seitenflächen des Speicherzellstapels 7, 7a, 7b angeordnet sind, und welche benachbarte Gruppen erster und zweiter Energiespeicherzellen 1, 2 galvanisch verbinden. Dabei können die flächigen Kontaktelemente 5 beispielsweise durch ein Schweißverfahren, ein Spritzverfahren, ein Sputterverfahren oder ein Klebverfahren mit den Elektrodenelementen 1a, 2a kontaktiert werden. Vorzugweise ist dabei der elektrische Widerstand der Verbindungsstelle zwischen dem jeweiligen Kontaktelement 5 und den Elektrodenelementen 1a, 2a so gering wie möglich zu halten.

Die ersten und zweiten flächig parallelen Elektrodenelemente 1 bzw. 2 können beispielsweise vor dem Kontaktieren mit den jeweiligen Kontaktelementen 5 in geeigneter Weise gestapelt, gefaltet oder gewickelt werden, je nach gewünschter Zelltopologie. Beispielsweise können für eine sogenannte Pouch-Zelle die ersten und zweiten Elektrodenelemente 1a bzw. 2a unter Verwendung einer isolierenden Separatorschicht in mäanderförmigen Bahnen aufeinander gefaltet bzw. geschichtet werden. Für die Ausgestaltung einer prismatischen Zelle kann beispielsweise eine "racetrack pancake"-Topologie oder eine "racetrack double pancake"-Topologie verwendet werden, das heißt, eine flache spiralförmige Wicklung von ersten und zweiten Elektrodenelemente 1a bzw. 2a, welche entlang einer Querschnittsrichtung der entstehenden Wicklung gestaucht bzw. komprimiert werden kann, um eine "racetrack"-Form, das heißt, eine über enge Außenradien verbundene, im Wesentlichen parallel verlaufende Wicklungsbahnen zu erhalten.

Optional kann ein Einschließen der Speicherzellstapel 7, 7a, 7b sowie der Kontaktelemente 5 in einem Gehäuse 4 erfolgen. Dabei können die ersten und zweiten Polanschlüsse 6a, 6b als elektrische Anschlüsse des Energiespeichermoduls aus dem Gehäuse 4 herausgeführt werden.

## Patentansprüche

1. Elektrisches Energiespeichermodul (20), mit:
mindestens einem Speicherzellstapel (7), welcher aufweist:
eine Vielzahl von Gruppen erster, flächig paralleler Energiespeicherzellen (1), welche jeweils erste Elektrodenelemente (1a) aufweisen, und
eine Vielzahl von flächig parallel zu den Gruppen erster Energiespeicherzellen (1) angeordneten Gruppen zweiter, flächig paralleler Energiespeicherzellen (2), welche jeweils zweite Elektrodenelemente (2a) aufweisen,
wobei die Gruppen erster und zweiter Energiespeicherzellen (1; 2) alternierend entlang einer ersten Erstreckungsrichtung des Speicherzellstapels (7) angeordnet sind, und
wobei die ersten Elektrodenelemente (1a) an einer Seitenfläche des Speicherzellstapels (7) eine unterschiedliche Polarität zu den zweiten Elektrodenelementen (2a) an der Seitenfläche des Speicherzellstapels (7) aufweisen;
einer Vielzahl flächiger Kontaktelemente (5), welche an den Seitenflächen des Speicherzellstapels (7) angeordnet sind, welche benachbarte Gruppen erster und zweiter Energiespeicherzellen (1; 2) galvanisch verbinden, und welche alle ersten oder zweiten Elektrodenelemente (1 a; 2a) der benachbarten Gruppen erster und zweiter Energiespeicherzellen (1; 2) jeweils über die Breite des Speicherzellstapels (7) hinweg kontaktieren;
einem ersten flächigen Polanschluss (6b), welcher erste Elektrodenelemente (1a) einer an einer ersten Endfläche des Speicherzellstapels (7) angeordneten Gruppe erster Energiespeicherzellen (1) elektrisch kontaktiert; und
einem zweiten flächigen Polanschluss (6a), welcher zweite Elektrodenelemente (2a) einer an einer zweiten Endfläche des Speicherzellstapels (7) angeordneten Gruppe zweiter Energiespeicherzellen (2) elektrisch kontaktiert,
wobei der erste flächige Polanschluss (6b) und der zweite flächige Polanschluss (6a) benachbart zueinander und zumindest teilweise parallel zueinander entlang derselben Seitenfläche des Speicherzellstapels (7) geführt sind.

2. Elektrisches Energiespeichermodul (30) mit:
zwei an Seitenflächen aneinander angrenzende Speicherzellstapel (7a; 7b), welche jeweils aufweisen:
eine Vielzahl von Gruppen erster, flächig paralleler Energiespeicherzellen (1), welche jeweils erste Elektrodenelemente (1a) aufweisen, und
eine Vielzahl von flächig parallel zu den Gruppen erster Energiespeicherzellen (1) angeordneten Gruppen zweiter, flächig paralleler Energiespeicherzellen (2), welche jeweils zweite Elektrodenelemente (2a) aufweisen,
wobei die Gruppen erster und zweiter Energiespeicherzellen (1; 2) alternierend entlang einer ersten Erstreckungsrichtung des Speicherzellstapels (7a, 7b) angeordnet sind, und
wobei die ersten Elektrodenelemente (1a) an einer Seitenfläche des Speicherzellstapels (7a, 7b) eine unterschiedliche Polarität zu den zweiten Elektrodenelementen (2a) an der Seitenfläche des Speicherzellstapels (7a, 7b) aufweisen;
einer Vielzahl flächiger Kontaktelemente (5), welche an den Seitenflächen des Speicherzellstapels (7a, 7b) angeordnet sind, welche benachbarte Gruppen erster und zweiter Energiespeicherzellen (1; 2) galvanisch verbinden, und welche alle ersten oder zweiten Elektrodenelemente (1a; 2a) der benachbarten Gruppen erster und zweiter Energiespeicherzellen (1; 2) jeweils über die Breite des Speicherzellstapels (7a, 7b) hinweg kontaktieren;
einem ersten flächigen Polanschluss (6b), welcher erste Elektrodenelemente (1a) einer an einer Endfläche eines ersten Speicherzellstapels (7a) angeordneten Gruppe erster Energiespeicherzellen (1) elektrisch kontaktiert; und
einem zweiten flächigen Polanschluss (6a), welcher erste Elektrodenelemente (1a) einer an einer Endfläche eines zweiten Speicherzellstapels (7b) angeordneten Gruppe erster Energiespeicherzellen (1) elektrisch kontaktiert,
wobei der erste flächige Polanschluss (6b) und der zweite flächige Polanschluss (6a) parallel zueinander zwischen den zwei Speicherzellstapeln (7a; 7b) angeordnet sind.

3. Elektrisches Energiespeichermodul (20; 30) nach einem der Ansprüche 1 oder 2, weiterhin mit:
einer Isolationsschicht (8), welche zwischen dem ersten flächigen Polanschluss (6b) und dem zweiten flächigen Polanschluss (6a) zum galvanischen Isolieren der Polanschlüsse (6a; 6b) angeordnet ist.

4. Elektrisches Energiespeichermodul (20; 30) nach einem der vorhergehenden Ansprüche, weiterhin mit:
einem Gehäuse (4), welches die Gruppen erster, flächig paralleler Energiespeicherzellen (1), die Gruppen zweiter, flächig paralleler Energiespeicherzellen (2) und die Vielzahl von Kontaktelementen (5) einschließt.

5. Elektrisches Energiespeichermodul (20; 30) nach Anspruch 4, wobei das Gehäuse (4) aus einem nicht oder nur geringfügig elektrisch leitfähigen Material besteht.

6. Elektrisches Energiespeichermodul (20; 30) nach einem der vorgehenden Ansprüche, wobei die ersten und zweiten Elektrodenelemente (1a; 2a) spiralförmig ineinander gewickelt sind.

7. Elektrisches Energiespeichermodul (20; 30) nach einem der Ansprüche 1 bis 5, wobei die ersten und zweiten Elektrodenelemente (1a; 2a) als Elektrodenstapel aus einzelnen Lagen oder als Faltstapel ausgebildet sind.

8. Verfahren (40) zum Herstellen eines elektrischen Energiespeichermoduls (20), mit den Schritten:
alternierendes Anordnen (41) einer Vielzahl von Gruppen erster, flächig paralleler Energiespeicherzellen (1), welche jeweils erste Elektrodenelemente (1a) aufweisen, und einer Vielzahl von flächig parallel zu den Gruppen erster Energiespeicherzellen (1) angeordneten Gruppen zweiter, flächig paralleler Energiespeicherzellen (2), welche jeweils zweite Elektrodenelemente (2a) aufweisen, in mindestens einem Speicherzellstapel (7) entlang einer ersten Erstreckungsrichtung des Speicherzellstapels (7), wobei die ersten Elektrodenelemente (1a) an einer Seitenfläche des Speicherzellstapels (7) eine unterschiedliche Polarität zu den zweiten Elektrodenelementen (2a) an der Seitenfläche des Speicherzellstapels (7) aufweisen;
Kontaktieren (42) aller ersten oder zweiten Elektrodenelemente (1 a; 2a) der benachbarten Gruppen erster und zweiter Energiespeicherzellen (1; 2) jeweils über die Breite des Speicherzellstapels (7) hinweg mithilfe einer Vielzahl flächiger Kontaktelemente (5), welche an den Seitenflächen des Speicherzellstapels (7) angeordnet sind, und welche benachbarte Gruppen erster und zweiter Energiespeicherzellen (1; 2) galvanisch verbinden;
Anordnen eines ersten flächigen Polanschlusses (6b), welcher erste Elektrodenelemente (1a) einer an einer ersten Endfläche des Speicherzellstapels (7) angeordneten Gruppe erster Energiespeicherzellen (1) elektrisch kontaktiert; und
Anordnen eines zweiten flächigen Polanschlusses (6a), welcher zweite Elektrodenelemente (2a) einer an einer zweiten Endfläche des Speicherzellstapels (7) angeordneten Gruppe zweiter Energiespeicherzellen (2) elektrisch kontaktiert,
**dadurch gekennzeichnet, dass**
der erste flächige Polanschluss (6b) und der zweite flächige Polanschluss (6a) benachbart zueinander und zumindest teilweise parallel zueinander entlang derselben Seitenfläche des Speicherzellstapels geführt werden.

9. Verfahren (40) zum Herstellen eines elektrischen Energiespeichermoduls (30) mit zwei an Seitenflächen aneinander angrenzenden Speicherzellzellstapeln (7a, 7b) mit den Schritten:
alternierendes Anordnen (41) einer Vielzahl von Gruppen erster, flächig paralleler Energiespeicherzellen (1), welche jeweils erste Elektrodenelemente (1a) aufweisen, und einer Vielzahl von flächig parallel zu den Gruppen erster Energiespeicherzellen (1) angeordneten Gruppen zweiter, flächig paralleler Energiespeicherzellen (2), welche jeweils zweite Elektrodenelemente (2a) aufweisen, in zwei Speicherzellstapeln (7a, 7b) entlang einer ersten Erstreckungsrichtung des Speicherzellstapels (7a, 7b), wobei die ersten Elektrodenelemente (1a) an einer Seitenfläche des Speicherzellstapels (7a, 7b) eine unterschiedliche Polarität zu den zweiten Elektrodenelementen (2a) an der Seitenfläche des Speicherzellstapels (7a, 7b) aufweisen;
Kontaktieren (42) aller ersten oder zweiten Elektrodenelemente (1a; 2a) der benachbarten Gruppen erster und zweiter Energiespeicherzellen (1; 2) jeweils über die Breite des Speicherzellstapels (7a, 7b) hinweg mithilfe einer Vielzahl flächiger Kontaktelemente (5), welche an den Seitenflächen des Speicherzellstapels (7a, 7b) angeordnet sind, und welche benachbarte Gruppen erster und zweiter Energiespeicherzellen (1; 2) galvanisch verbinden;
Anordnen eines ersten flächigen Polanschlusses (6b), welcher erste Elektrodenelemente (1a) einer an einer Endfläche des ersten Speicherzellstapels (7a) angeordneten Gruppe erster Energiespeicherzellen (1) elektrisch kontaktiert; und Anordnen eines zweiten flächigen Polanschlusses (6a), welcher zweite Elektrodenelemente (2a) einer an einer Endfläche des zweiten Speicherzellstapels (7b) angeordneten Gruppe zweiter Energiespeicherzellen (2) elektrisch kontaktiert,
**dadurch gekennzeichnet, dass**
der erste flächige Polanschluss (6b) und der zweite flächige Polanschluss (6a) parallel zueinander zwischen den zwei Speicherzellstapeln (7a, 7b) angeordnet werden.

## Claims

1. Electrical energy storage module (20), comprising:
at least one storage cell stack (7) which has:
a plurality of groups of first, planar-parallel energy storage cells (1) which each have first electrode elements (1a), and
a plurality of groups of second, planar-parallel energy storage cells (2) which are arranged planar-parallel to the groups of first energy storage cells (1) and each have second electrode elements (2a),
wherein the groups of first and second energy storage cells (1; 2) are arranged alternately along a first direction of extent of the storage cell stack (7), and
wherein the first electrode elements (1a) have, on a side face of the storage cell stack (7), a different polarity from the second electrode elements (2a) on the side face of the storage cell stack (7);
a plurality of planar contact elements (5) which are arranged on the side faces of the storage cell stack (7) and which galvanically connect adjacent groups of first and second energy storage cells (1; 2) and which contact all the first or second electrode elements (1a; 2a) of the adjacent groups of first and second energy storage cells (1; 2), in each case over the width of the storage cell stack (7);
a first planar pole terminal (6b) which makes electrical contact with first electrode elements (1a) of a group of first energy storage cells (1) arranged on a first end face of the storage cell stack (7); and
a second planar pole terminal (6a) which makes electrical contact with second electrode elements (2a) of a group of second energy storage cells (2) arranged on a second end face of the storage cell stack (7),
wherein the first planar pole terminal (6b) and the second planar pole terminal (6a) are made to extend adjacent to one another and at least partly parallel to one another along the same side face of the storage cell stack (7).

2. Electrical energy storage module (30), comprising:
two storage cell stacks (7a; 7b) which adjoin one another at side faces and each have:
a plurality of groups of first, planar-parallel energy storage cells (1) which each have first electrode elements (1a), and
a plurality of groups of second, planar-parallel energy storage cells (2) which are arranged planar-parallel to the groups of first energy storage cells (1) and each have second electrode elements (2a),
wherein the groups of first and second energy storage cells (1; 2) are arranged alternately along a first direction of extent of the storage cell stack (7a, 7b), and
wherein the first electrode elements (1a) have, on a side face of the storage cell stack (7a, 7b), a different polarity from the second electrode elements (2a) on the side face of the storage cell stack (7a, 7b);
a plurality of planar contact elements (5) which are arranged on the side faces of the storage cell stack (7a, 7b) and which galvanically connect adjacent groups of first and second energy storage cells (1; 2) and. which contact all the first or second electrode elements (1a; 2a) of the adjacent groups of first and second energy storage cells (1; 2), in each case over the width of the storage cell stack (7a, 7b);
a first planar pole terminal (6b) which makes electrical contact with first electrode elements (1a) of a group of first energy storage cells (1) arranged on an end face of a first storage cell stack (7a); and
a second planar pole terminal (6a) which makes electrical contact with first electrode elements (1a) of a group of first energy storage cells (1) arranged on an end face of a second storage cell stack (7b),
wherein the first planar pole terminal (6b) and the second planar pole terminal (6a) are arranged parallel to one another between the two storage cell stacks (7a; 7b).

3. Electrical energy storage module (20; 30) according to either of Claims 1 and 2, also comprising:
an insulation layer (8) which is arranged between the first planar pole terminal (6b) and the second planar pole terminal (6a) in order to galvanically insulate the pole terminals (6a; 6b).

4. Electrical energy storage module (20; 30) according to one of the preceding claims,
also comprising:
a housing (4) which includes the groups of first planar-parallel energy storage cells (1), the groups of second planar-parallel energy storage cells (2) and the plurality of contact elements (5).

5. Electrical energy storage module (20; 30) according to Claim 4, wherein the housing (4) is composed of an electrically non-conductive or only slightly electrically conductive material.

6. Electrical energy storage module (20; 30) according to one of the preceding claims, wherein the first and second electrode elements (1a; 2a) are wound in a spiral shape one in the other.

7. Electrical energy storage module (20; 30) according to one of Claims 1 to 5, wherein the first and second electrode elements (1a; 2a) are embodied as electrode stacks composed of individual layers or as a folding stack.

8. Method (40) for manufacturing an electrical energy storage module (20), comprising the steps:
alternating arrangement (41) of a plurality of groups of first planar-parallel energy storage cells (1) which each have first electrode elements (1a), and a plurality of groups of second planar-parallel energy storage cells (2) which are arranged planar-parallel with respect to the groups of first energy storage cells (1) and each have second electrode elements (2a), in at least one storage cell stack (7) along a first direction of extent of the storage cell stack (7), wherein the first electrode elements (1a) have, on a side face of the storage cell stack (7), a different polarity from the second electrode elements (2a) on the side face of the storage cell stack (7);
making contact (42) with all the first or second electrode elements (1a; 2a) of the adjacent groups of first and second energy storage cells (1; 2), in each case over the width of the storage cell stack (7), using a plurality of planar contact elements (5) which are arranged on the sides faces of the storage cell stack (7) and which galvanically connect adjacent groups of first and second energy storage cells (1; 2); arrangement of a first planar pole terminal (6b) which makes electrical contact with first electrode elements (1a) of a group of first energy storage cells (1) arranged on a first end face of the storage cell stack (7); and
arrangement of a second planar pole terminal (6a) which makes electrical contact with second electrode elements (2a) of a group of second energy storage cells (2) arranged on a second end face of the storage cell stack (7),
**characterized in that** the first planar pole terminal (6b) and the second planar pole terminal (6a) are made to extend adjacent to one another and at least partly parallel to one another along the same side face of the storage cell stack.

9. Method (40) for manufacturing an electrical energy storage module (30) comprising two storage cell cell stacks (7a, 7b) which adjoin one another at side faces, comprising the steps:
alternating arrangement (41) of a plurality of groups of first planar-parallel energy storage cells (1) which each have first electrode elements (1a), and a plurality of groups of second planar-parallel energy storage cells (2) which are arranged planar-parallel with respect to the groups of first energy storage cells (1) and each have second electrode elements (2a), in two storage cell stacks (7a, 7b) along a first direction of extent of the storage cell stack (7a, 7b), wherein the first electrode elements (1a) have, on a side face of the storage cell stack (7a, 7b), a different polarity from the second electrode elements (2a) on the side face of the storage cell stack (7a, 7b);
making contact (42) with all the first or second electrode elements (1a; 2a) of the adjacent groups of first and second energy storage cells (1; 2), in each case over the width of the storage cell stack (7a, 7b), using a plurality of planar contact elements (5) which are arranged on the sides faces of the storage cell stack (7a, 7b) and which galvanically connect adjacent groups of first and second energy storage cells (1; 2);
arrangement of a first planar pole terminal (6b) which makes electrical contact with first electrode elements (1a) of a group of first energy storage cells (1) arranged on an end face of a first storage cell stack (7a); and
arrangement of a second planar pole terminal (6a) which makes electrical contact with second electrode elements (2a) of a group of second energy storage cells (2) arranged on an end face of a second storage cell stack (7b),
**characterized in that** the first planar pole terminal (6b) and the second planar pole terminal (6a) are arranged parallel to one another between the two storage cell stacks (7a, 7b).

## Revendications

1. Module de stockage d'énergie électrique (20) avec :
au moins un empilement de cellules de stockage (7), laquelle comporte :
une pluralité de groupes de premières cellules de stockage d'énergie parallèles dans un même plan (1), lesquels comportent respectivement des premiers éléments d'électrodes (1a), et
une pluralité de groupes de deuxièmes cellules de stockage d'énergie parallèles dans un même plan (2), disposés parallèlement dans un même plan par rapport aux groupes des premières cellules de stockage d'énergie (1), lesquels comportent respectivement des deuxièmes éléments d'électrode (2a),
les groupes de premières et de deuxièmes cellules de stockage d'énergie (1 ; 2) étant disposés de façon alternée le long d'une première direction d'extension de l'empilement de cellules de stockage (7), et
les premiers éléments d'électrodes (1a) comportant sur une surface latérale de l'empilement de cellules de stockage (7) une polarité différente par rapport aux deuxièmes éléments d'électrode (2a) sur la surface latérale de l'empilement de cellules de stockage (7),
une pluralité d'éléments de contact plans (5), lesquels sont disposés sur les surfaces latérales de l'empilement de cellules de stockage (7), lesquels relient galvaniquement les groupes voisins des premières et deuxièmes cellules de stockage d'énergie (1 ; 2) sont et lesquels mettent en contact respectivement tous les premiers ou deuxièmes éléments d'électrode (1a ; 2a) des groupes voisins des premières ou deuxièmes cellules de stockage d'énergie (1 ; 2) à travers la largeur de l'empilement de cellules de stockage (7),
une première connexion polaire (6b) plane, laquelle met électriquement en contact les premiers éléments d'électrode (1a) d'un groupe de premières cellules de stockage d'énergie (1), disposé sur une première surface finale de l'empilement de cellules de stockage (7), et
une deuxième connexion polaire plane (6a), laquelle met électriquement en contact les deuxièmes éléments d'électrode (2a) d'un groupe de deuxièmes cellules de stockage d'énergie (2), disposé sur une deuxième surface finale de l'empilement de cellules de stockage (7),
la première connexion polaire plane (6b) et la deuxième connexion polaire plane (6a) étant guidées adjacentes l'une par rapport à l'autre et au moins en partie parallèlement l'une par rapport à l'autre le long de la même surface latérale de l'empilement de cellules de stockage (7).

2. Module de stockage d'énergie électrique (30) avec :
deux empilements de cellules de stockage (7a ; 7b) voisines l'une de l'autre sur les surfaces latérales, lesquels comportent respectivement :
une pluralité de groupes de premières cellules de stockage d'énergie parallèles dans un même plan (1), lesquels comportent respectivement des premiers éléments d'électrodes (1a), et
une pluralité de groupes de deuxièmes cellules de stockage d'énergie parallèles dans un même plan (2), disposés parallèlement dans un même plan par rapport aux groupes des premières cellules de stockage d'énergie (1), lesquels comportent respectivement des deuxièmes éléments d'électrodes (2a),
les groupes des premières et deuxièmes cellules de stockage d'énergie (1 ; 2) étant disposés de façon alternée le long d'une première direction d'extension de l'empilement de cellules de stockage (7a, 7b), et
les premiers éléments d'électrode (1a) comportant sur une surface latérale de l'empilement de cellules de stockage (7a, 7b) une polarité différente par rapport aux deuxièmes éléments d'électrode (2a) sur la surface latérale de l'empilement de cellules de stockage (7a, 7b), et
une pluralité d'éléments de contact plans (5), lesquels sont disposés sur les surfaces latérales de l'empilement de cellules de stockage (7a, 7b), lesquels relient galvaniquement les groupes voisins des premières et deuxièmes cellules de stockage d'énergie (1 ; 2) et lesquels mettent en contact respectivement tous les premiers ou deuxièmes éléments d'électrode (1a ; 2a) des groupes voisins des premières et deuxièmes cellules de stockage d'énergie (1 ; 2) à travers la largeur de l'empilement de cellules de stockage (7a, 7b),
une première connexion polaire (6b) plane, laquelle met électriquement en contact les premiers éléments d'électrode (1a) d'un groupe de premières cellules de stockage d'énergie (1), disposé sur une surface finale d'un premier empilement de cellules de stockage (7a), et
une deuxième connexion polaire plane (6a), laquelle met électriquement en contact les premiers éléments d'électrode (1a) d'un groupe de premières cellules de stockage d'énergie (1), disposé sur une surface finale d'un deuxième empilement de cellules de stockage (7b),
la première connexion polaire plane (6b) et la deuxième connexion polaire plane (6a) étant disposées parallèlement l'une à l'autre entre les deux empilements de cellules de stockage (7a ; 7b).

3. Module de stockage d'énergie électrique (20 ; 30) selon l'une quelconque des revendications 1 ou 2 avec en plus :
une couche isolante (8), laquelle est disposée entre la première connexion polaire plane (6b) et la deuxième connexion polaire plane (6a) pour isoler galvaniquement les connexions polaires (6a ; 6b).

4. Module de stockage d'énergie électrique (20 ; 30) selon l'une quelconque des revendications précédentes, avec en plus :
un boîtier (4), lequel renferme les groupes des premières cellules de stockage d'énergie parallèles dans un même plan (1), les groupes des deuxièmes cellules de stockage d'énergie parallèles dans un même plan (2) et la pluralité d'éléments de contact (5).

5. Module de stockage d'énergie électrique (20 ; 30) selon la revendication 4, le boîtier (4) étant dans un matériau n'étant pas ou étant seulement faiblement électroconducteur.

6. Module de stockage d'énergie électrique (20 ; 30) selon l'une quelconque des revendications précédentes, les premiers et deuxièmes éléments d'électrode (1a ; 2a) étant enroulés l'un dans l'autre en forme de spirale.

7. Module de stockage d'énergie électrique (20 ; 30) selon l'une quelconque des revendications 1 à 5, les premiers et seconds éléments d'électrodes (1a ; 2a) étant constitués comme empilements d'électrodes sous la forme de couches individuelles ou sous la forme d'empilement en accordéon.

8. Procédé (40) de fabrication d'un module de stockage d'énergie électrique (20) avec les étapes suivantes :
mise en place alternative (41) d'une pluralité de groupes de premières cellules de stockage d'énergie dans un même plan (1), lesquelles comportent respectivement des premiers éléments d'électrode (1a) et d'une pluralité de groupes de deuxièmes cellules de stockage d'énergie parallèles dans un même plan (2), disposés parallèlement dans un même plan par rapport aux groupes des premières cellules de stockage d'énergie (1), lesquels comportent respectivement les deuxièmes éléments d'électrode (2a) dans au moins un empilement de cellules de stockage (7) le long d'une première direction d'extension de l'empilement de cellules de stockage (7), les premiers éléments d'électrodes (1a) comportant sur une surface latérale de l'empilement de cellules de stockage (7) une polarité différente par rapport aux deuxièmes éléments d'électrode (2a) sur la surface latérale de l'empilement de cellules de stockage (7),
mise en contact (42) de tous les premiers ou deuxièmes éléments d'électrode (1a ; 2a) des groupes voisins des premières et deuxièmes cellules de stockage d'énergie (1 ; 2) respectivement à travers la largeur de l'empilement de cellules de stockage (7) à l'aide d'une pluralité d'éléments de contact plans (5), lesquels sont disposés sur les surfaces latérales de l'empilement de cellules de stockage (7) et lesquels relient galvaniquement les groupes voisins des premières et deuxièmes cellules de stockage d'énergie (1 ; 2),
mise en place d'une première connexion polaire plane (6b), laquelle met électriquement en contact les premiers éléments d'électrode (1a) d'un groupe de premières cellules de stockage d'énergie (1), disposé sur une première surface finale de l'empilement de premières cellules de stockage (7), et
mise en place d'une deuxième connexion polaire plane (6a), laquelle met électriquement en contact les deuxièmes éléments d'électrode (2a) d'un groupe de deuxièmes cellules de stockage d'énergie (2), disposé sur une deuxième surface finale de l'empilement de cellules de stockage (7),
**caractérisé en ce que**
la première connexion polaire en plane (6b) et la deuxième connexion polaire en plane (6a) sont guidées adjacentes l'une par rapport à l'autre et au moins en partie parallèlement l'une par rapport à l'autre le long de la même surface latérale de l'empilement de cellules de stockage.

9. Procédé (40) de fabrication d'un module de stockage d'énergie électrique (30) avec deux empilements de cellules de stockage (7a, 7b) voisins l'un de l'autre sur les surfaces latérales avec les étapes suivantes :
mise en place alternative (41) d'une pluralité de groupes de premières cellules de stockage d'énergie parallèles dans un même plan (1), lesquels comportent respectivement des éléments d'électrodes (1a) et d'une pluralité de groupes de deuxièmes cellules de stockage d'énergie parallèles dans un même plan (2), disposés parallèlement dans un même plan par rapport aux groupes des premières cellules de stockage d'énergie (1), lesquels comportent respectivement les deuxièmes éléments d'électrode (2a) en deux empilements de cellules de stockage (7a, 7b) le long d'une première direction d'extension de l'empilement de cellules de stockage (7a, 7b), les premiers éléments d'électrode (1a) comportant sur une surface latérale de l'empilement de cellules de stockage (7a, 7b) une polarité différente par rapport aux deuxièmes éléments d'électrode (2a) sur la surface latérale de l'empilement de cellules de stockage (7a, 7b),
mise en contact (42) de tous les premiers ou deuxièmes éléments d'électrode (1a ; 2a) des groupes voisins des premières et deuxièmes cellules de stockage d'énergie (1 ; 2) respectivement à travers la largeur de l'empilement de cellules de stockage (7a, 7b) à l'aide d'une pluralité d'éléments de contact plans (5), lesquels sont disposés sur les surfaces latérales de l'empilement de cellules de stockage (7a, 7b) et lesquels relient galvaniquement les groupes voisins des premières et deuxièmes cellules de stockage d'énergie (1 ; 2),
mise en place d'une première connexion polaire plane (6b), laquelle met électriquement en contact les premiers éléments d'électrode (1a) d'un groupe de premières cellules de stockage d'énergie (1), disposé sur une surface finale du premier empilement de cellules de stockage (7a),
et mise en place d'une deuxième connexion polaire plane (6a), laquelle met électriquement en contact les deuxièmes éléments d'électrode (2a) d'un groupe de deuxièmes cellules de stockage d'énergie (2), disposé sur une surface finale du deuxième empilement de cellules de stockage (7b),
**caractérisé en ce que**
la première connexion polaire plane (6b) et la deuxième connexion polaire plane (6a) sont disposées parallèlement l'une par rapport à l'autre entre les deux empilemnts de cellules de stockage (7a, 7b).
